# EUROPÄISCHE PATENTSCHRIFT

(11) **EP 3 186 506 B1**
(45) Veröffentlichungstag und Bekanntmachung des Hinweises auf die Patenterteilung: **25.07.2018**
(21) Anmeldenummer: 15766797.3
(22) Anmeldetag: 17.09.2015
(51) Int. Cl.: F03G 7/04, F03B 17/00

(54) **VORRICHTUNG UND VERFAHREN ZUM SPEICHERN VON ENERGIE**
DEVICE AND METHOD FOR STORING ENERGY
DISPOSITIF ET PROCÉDÉ DE STOCKAGE D'ÉNERGIE

(30) Priorität: 29.09.2014 DE 102014219678
(43) Veröffentlichungstag der Anmeldung: 05.07.2017
(73) Patentinhaber: Siemens Aktiengesellschaft, 80333 München (DE)
(72) Erfinder: TREMEL, Alexander, 91096 Möhrendorf (DE); LENK, Uwe, 08064 Zwickau (DE)
(86) Internationale Anmeldenummer: PCT/EP2015/071292
(87) Internationale Veröffentlichungsnummer: WO 2016/050524

(56) Entgegenhaltungen:
- WO-A1-2014/106550
- DE-A1-102004 047 290
- DE-A1-102012 015 732

## Beschreibung

Die Erfindung betrifft eine Vorrichtung und ein Verfahren zum Speichern von Energie, insbesondere elektrischem Strom.

Die Speicherung von elektrischem Strom durch Batterien ist üblicherweise auf einen Leistungsbereich von weniger als einigen Megawatt begrenzt. Dies liegt an der spezifischen Baugröße von Batterien, aber vor allem an den spezifischen Investkosten, die sehr hoch sind. Im großen Leistungsbereich kann die Speicherung von Energie, insbesondere elektrischem Strom, beispielsweise durch Pumpspeicherkraftwerke und sogenannte Power-to-Gas-Anwendungen realisiert werden. Pumpspeicherkraftwerke jedoch sind in ihrer Anwendung durch geografische und ökologische Randbedingungen limitiert. Zudem ist zu ihrer Errichtung ein großer Investitionsbedarf notwendig. Die Power-to-Gas-Technologie ist für die Langzeitspeicherung geeignet, hat aber noch keine hinreichende Entwicklungsreife erreicht. Weiterhin befinden sich Druckluftspeicherkraftwerke in der Entwicklung, die ebenfalls in einem großen Leistungsbereich angewendet werden können. Solche Druckluftspeicherkraftwerke sind jedoch ebenfalls geografisch gebunden und verfügen nur über einen mittleren Stromspeicherwirkungsgrad. Darüber hinaus haben auch solche Druckluftspeicherkraftwerke noch keine hinreichende Entwicklungsreife erreicht.

Aspekte eine Energieumsetzung zu Zwecken einer sehr kurzzeitigen Energiespeicherung kann die DE 10 2004 047 290 A1 offenbaren. Darin wird gelehrt, flüssiges Wasser unter erhöhtem Druck aus einer elektrisch betriebenen Druckaufbaueinrichtung in einen Wasserspeicher zu überführen, um damit eine Wasserturbine anzutreiben. Der Wasserdruck in dem Wasserspeicher ist gepuffert durch einen angeschlossenen Gasdruckspeicher, welcher etwa mit Luft oder Stickstoff beschickt wird. In der Wasserturbine erfolgt der Druckabbau im flüssigen Wasser und dieses fließt nach Zwischenspeicherung ab zurück in die Druckaufbaueinrichtung.

Nachteilig an dieser Vorrichtung aus dem Stand der Technik ist jedoch, dass zum Aufbau eines erhöhten Druckes in flüssigem Wasser eine sehr aufwändige Druckaufbaueinrichtung vorgehalten werden muss. Zudem weist eine Wasserturbine nur einen geringen Wirkungsgrad auf, so dass die Zwischenspeicherung von Energie signifikante Verluste erfährt. Fernerhin dient die in der DE 10 2004 047 290 A1 beschriebene Vorrichtung lediglich dazu, sehr kurzzeitig Energie zwischen zu speichern, da jegliche Form der Energieaufnahme in den Prozess der Druckerhöhung bei flüssigem Wasser überführt wird, dieser aber eine pneumatische Begrenzung aufweist.

Aufgabe der vorliegenden Erfindung ist es daher, eine Vorrichtung und ein Verfahren zu schaffen, mittels welchen Energie insbesondere in Form von elektrischer Energie besonders effektiv und effizient gespeichert werden kann. Weiterhin ist es Aufgabe der vorliegenden Erfindung, dieses Ziel mit verhältnismäßig geringem technischem Aufwand zu erreichen.

Diese Aufgabe wird durch eine Vorrichtung mit den Merkmalen des Patentanspruchs 1 sowie durch ein Verfahren mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zum Speichern von Energie, insbesondere elektrischem Strom, mit wenigstens einem ersten Behälter, welcher einen ersten Aufnahmeraum aufweist. Die Vorrichtung umfasst ferner eine in dem ersten Behälter angeordnete Trenneinrichtung, durch welche der erste Aufnahmeraum in eine erste Kammer zum Aufnehmen eines ersten Mediums und eine zweite Kammer zum Aufnehmen einer Gasphase unterteilt ist. Die Trenneinrichtung ist dabei unter gleichzeitiger Volumenänderung der Kammern relativ zum ersten Behälter bewegbar. Mit anderen Worten, bewegt sich die Trenneinrichtung in dem ersten Behälter relativ zu diesem, so geht damit eine gleichzeitige Volumenänderung der Kammern einher. Die Volumenänderung der ersten Kammer ist dabei reziprok zur Volumenänderung der zweiten Kammer. Dies bedeutet, dass beim Bewegen der Trenneinrichtung eine Volumenverkleinerung der ersten Kammer mit einer Volumenvergrößerung der zweiten Kammer und umgekehrt einhergeht. Dabei verändern sich die Volumen der Kammer in gleichem Maße. Dies bedeutet, dass sich beispielsweise das Volumen der ersten Kammer in gleichem Maße verringert wie sich das Volumen der zweiten Kammer vergrößert und umgekehrt.

Die Vorrichtung umfasst des Weiteren wenigstens einen zweiten Behälter, welcher einen mit der zweiten Kammer verbundenen zweiten Aufnahmeraum aufweist, dessen Inhalt im Stoffaustausch, insbesondere im thermodynamischen Gleichgewicht mit der Gasphase steht. Außerdem umfasst die Vorrichtung eine Temperierungseinrichtung, mittels welcher Wärme beziehungsweise Wärmeenergie dem zweiten Behälter zuführbar und vom zweiten Behälter abführbar ist. Ferner umfasst die Vorrichtung wenigstens eine Fördereinrichtung, mittels welcher das Medium mit einem vorgebbaren Druck in die erste Kammer unter gleichzeitiger, mittels der Temperierungseinrichtung bewirkter Wärmeabfuhr von dem zweiten Behälter förderbar ist. Mit anderen Worten wird mittels der Fördereinrichtung das Medium mit einem vorgebbaren Druck in die erste Kammer gefördert, wobei gleichzeitig mittels der Temperierungseinrichtung Wärme vom zweiten Behälter und insbesondere von dessen Inhalt abgeführt wird.

Zusätzlich umfasst die Vorrichtung wenigstens eine Expansionseinrichtung, welche von dem in der ersten Kammer unter Druck aufgenommenen Medium unter gleichzeitiger, mittels der Temperierungseinrichtung bewirkter Wärmezufuhr in den zweiten Behälter antreibbar ist. Mit anderen Worten wird das in dem ersten Behälter, insbesondere der ersten Kammer, unter Druck aufgenommene beziehungsweise gespeicherte Medium aus der ersten Kammer abgeführt und zur Expansionseinrichtung geführt, welche mittels des Mediums angetrieben wird, wobei gleichzeitig mittels der Temperierungseinrichtung dem zweiten Behälter und insbesondere dessen Inhalt Wärme beziehungsweise Wärmeenergie zugeführt wird.

Mittels der Vorrichtung kann Energie, welche zum Antreiben der Fördereinrichtung und somit zum Fördern des Mediums in die erste Kammer aufgewendet wird, insbesondere in wenigstens einer anderen Energieform besonders effizient und effektiv gespeichert beziehungsweise zwischengespeichert oder eingespeichert werden, da die Fördereinrichtung gegen einen zumindest im Wesentlichen konstanten Gegendruck im ersten Behälter fördert. Dadurch sind eine zumindest im Wesentlichen optimale Auslegung und ein hoher Wirkungsgrad realisierbar. Bei der Energie zum Antreiben der Fördereinrichtung handelt es sich insbesondere um mechanische beziehungsweise elektrische Energie beziehungsweise elektrischen Strom, die beziehungsweise der besonders effizient und effektiv mittels der Vorrichtung gespeichert beziehungsweise zwischengespeichert werden kann.

Ferner kann die zwischengespeicherte Energie besonders effektiv und effizient ausgespeichert, das heißt von der Vorrichtung abgeführt werden. Hierzu wird die Expansionseinrichtung mittels des Mediums angetrieben, sodass beispielsweise von der Expansionseinrichtung infolge ihres Antreibens Energie insbesondere in Form von mechanischer Energie bereitgestellt und genutzt werden kann. Durch die während des Antreibens der Expansionseinrichtung und somit während des Ausspeicherns der Energie durchgeführte Wärmezufuhr kann ein hoher Druck in beiden Behältern realisiert werden. Durch diese Wärmezufuhr und aufgrund des dadurch besonders hohen Drucks bei der Ausspeicherung kann - wie sich gezeigt hat - sogar mehr Energie, insbesondere elektrische Energie, ausgespeichert werden als zuvor eingespeichert wurde, wenn die zugeführte Wärmeenergie nicht berücksichtigt wird.

Um den Energieaufwand zum Fördern des Mediums und somit zum Befüllen der ersten Kammer besonders gering zu halten, ist ein stromauf der ersten Kammer angeordneter Wärmeübertrager zum Bewirken eines Wärmeaustauschs zwischen dem Medium und dem Inhalt des zweiten Behälters vorgesehen. Dadurch kann eine besonders effektive und effiziente Energiespeicherung realisiert werden. Dies ist insbesondere vorteilhaft, wenn als das Medium kaltes Wasser beziehungsweise eine kalte Flüssigkeit verwendet wird. Durch den Einsatz des Wärmeübertragers kann die Temperatur des Inhalts des zweiten Behälters gering gehalten werden, sodass auch der Energieaufwand zum Fördern des Mediums in die erste Kammer gering gehalten werden kann.

Eine weitere Ausführungsform zeichnet sich dadurch aus, dass das Medium eine Flüssigkeit, insbesondere Wasser, oder ein Gas, insbesondere Luft, ist. Durch die Verwendung von Flüssigkeit beziehungsweise Wasser oder eines Gases beziehungsweise Luft kann die Energie mittels der Vorrichtung besonders effizient und effektiv gespeichert werden.

Ferner hat es sich als besonders vorteilhaft gezeigt, wenn der Inhalt des zweiten Behälters eine Flüssigkeit oder ein Feststoff ist. Bei der im zweiten Behälter aufgenommenen Flüssigkeit kann es sich um den gleichen Stoff oder das gleiche Stoffgemisch wie die Gasphase in der zweiten Kammer handeln. Hierbei liegt dann beispielsweise ein thermodynamisches Phasengleichgewicht im Zweiphasengebiet vor. Weiterhin ist auch ein Lösungsgleichgewicht zwischen einer Flüssigkeit als dem Inhalt und der Gasphase möglich, oder zwischen beiden befindet sich eine chemische Reaktion im Gleichgewicht. Ein erstes Beispiel für ein solches Gleichgewicht ist beispielsweise das Phasengleichgewicht zwischen einer gasförmigen Phase, das heißt der Gasphase in der zweiten Kammer und einer flüssigen Phase im zweiten Behälter, wobei beispielsweise Ammoniak oder ein Kältemittel als Reinstoff im Zweiphasengebiet zum Einsatz kommen. Ein zweites Beispiel für ein Gleichgewicht ist ein Lösungsgleichgewicht zwischen einer Gasphase und einer Flüssigkeit, so zum Beispiel eine Lösung von Kohlendioxid (CO₂) oder Ammoniak in Wasser. Ein drittes Beispiel für ein Gleichgewicht ist ein chemisches Gleichgewicht zwischen einer Gasphase und einem Feststoff. Hierbei kann es sich beispielsweise um eine reversible Reaktion zwischen Kupfercarbonat (CuCO₃) und Kupferoxid (CuO) handeln. Diese reversible Reaktion ist im Folgenden dargestellt:

CuO + CO₂ <-> CuCO₃

Durch Einbauten, beispielsweise durch einen Rührer, mittels welchem beispielsweise die Flüssigkeit als der Inhalt gerührt wird, soll ein reger Austausch, das heißt Stoffaustausch zwischen dem Inhalt beziehungsweise der Flüssigkeit und der Gasphase sichergestellt werden.

Eine weitere Ausführungsform zeichnet sich dadurch aus, dass die Fördereinrichtung wenigstens einen Verdichter zum Verdichten des insbesondere als Gas, insbesondere Luft, ausgebildeten Mediums umfasst. Hierdurch kann Energie besonders effizient, schnell und effektiv gespeichert werden.

Zur Realisierung einer besonders effizienten Einspeicherung und Ausspeicherung von Energie ist bei einer weiteren Ausführungsform wenigstens ein Wärmespeicher vorgesehen, in welchem Wärme aus dem durch das Verdichten erwärmten Medium speicherbar ist. Handelt es sich bei dem Medium beispielsweise um ein Gas wie beispielsweise Luft, so wird die Luft durch das mittels des Verdichters bewirkten Verdichten erwärmt. Zumindest ein Teil der in der verdichteten Luft enthaltenen Wärme kann von der verdichteten Luft abgeführt werden, sodass sich ein besonders hoher Verdichtungsgrad der Luft realisieren lässt. Die von der verdichteten Luft abgeführte Wärme kann im Wärmespeicher gespeichert und für andere Zwecke beispielsweise beim Antreiben der Expansionseinrichtung verwendet werden.

In weiterer Ausgestaltung der Erfindung umfasst die Vorrichtung einen von der Expansionseinrichtung antreibbaren Generator, mittels welchem durch Antreiben des Generators elektrische Energie bereitstellbar ist. Dadurch ist es beispielsweise auf besonders effiziente und effektive Weise möglich, elektrische Energie in einer demgegenüber unterschiedlichen Energieform in der Vorrichtung zu speichern sowie elektrische Energie aus der Vorrichtung auszuspeichern, wobei die erfindungsgemäße Vorrichtung auch für besonders hohe Leistungsbereiche sowie für eine Langzeitspeicherung geeignet ist. Dies bedeutet, dass die erfindungsgemäße Vorrichtung eine kostengünstige Speicherung von Energie, insbesondere elektrischer Energie, in großem Maßstab und mit hohen Wirkungsgraden ermöglicht.

Wärme, die den zweiten Behälter und somit dessen Inhalt im Rahmen der mittels der Temperierungseinrichtung bewirkten Wärmezufuhr zugeführt wird, stammt beispielsweise aus einem Kraftwerks- oder Industrieprozess, insbesondere von einem weiteren Medium eines solchen Kraftwerks- oder Industrieprozesses. Die Wärme ist somit beispielsweise Abwärme, welche in dem weiteren Medium enthalten ist und mittels der erfindungsgemäßen Vorrichtung zur effizienten und effektiven Speicherung von Energie genutzt werden kann.

Ein zweiter Aspekt der Erfindung betrifft ein Verfahren zum Speichern von Energie, insbesondere elektrischer Energie, mittels einer Vorrichtung, insbesondere einer Vorrichtung gemäß dem ersten Aspekt der Erfindung. Die Vorrichtung umfasst somit wenigstens einen einen ersten Aufnahmeraum aufweisenden ersten Behälter und eine in dem ersten Behälter angeordnete Trenneinrichtung, durch welche der erste Aufnahmeraum in eine erste Kammer zum Aufnehmen eines ersten Mediums und eine zweite Kammer zum Aufnehmen einer Gasphase unterteilt ist, wobei die Trenneinrichtung unter gleichzeitiger Volumenänderung der Kammern relativ zum ersten Behälter bewegbar ist.

Ferner umfasst die Vorrichtung wenigstens einen zweiten Behälter, welcher einen mit der zweiten Kammer verbundenen zweiten Aufnahmeraum aufweist, dessen Inhalt im Stoffaustausch (im Idealfall in thermodynamischem Gleichgewicht) mit der Gasphase steht. Darüber hinaus ist eine Temperierungseinrichtung vorgesehen, mittels welcher Wärmeenergie dem zweiten Behälter zuführbar und vom zweiten Behälter abführbar ist. Die Vorrichtung umfasst wenigstens eine Fördereinrichtung, mittels welcher das Medium mit einem vorgebbaren Druck in die erste Kammer gefördert wird, wobei gleichzeitig mittels der Temperierungseinrichtung eine Wärmeabfuhr vom zweiten Behälter bewirkt wird. Ferner ist wenigstens eine Expansionseinrichtung vorgesehen, welche von dem in der ersten Kammer unter Druck aufgenommenen Medium angetrieben wird, wobei gleichzeitig mittels der Temperierungseinrichtung eine Wärmezufuhr in dem zweiten Behälter bewirkt wird. Vorteilhafte Ausgestaltungen des ersten Aspekts der Erfindung sind als vorteilhafte Ausgestaltungen des zweiten Aspekts der Erfindung anzusehen und umgekehrt.

In besonders vorteilhafter Ausgestaltung des zweiten Aspekts der Erfindung wird die Wärmezufuhr in den zweiten Behälter bei einer Temperatur von weniger als 200 Grad Celsius (°C), insbesondere bei weniger als 140 Grad Celsius und vorzugsweise bei weniger als 100 Grad Celsius, durchgeführt. Dadurch kann die Vorrichtung bei besonders niedrigen Betriebstemperaturen betrieben werden, sodass kostengünstige Standardbauteile verwendet werden können. Dadurch können Speicherkosten zum Speichern der Energie gering gehalten werden. Mit anderen Worten ist es dadurch möglich, den Einsatz von besonders temperaturbeständigen und somit kostenintensiven Werkstoffen zu vermeiden.

Um die Energie besonders kostengünstig zu speichern, ist es bei einer weiteren Ausführungsform des zweiten Aspekts der Erfindung vorgesehen, dass bei der Wärmezufuhr Wärme von einem weiteren Medium über die Temperierungseinrichtung in den zweiten Behälter, insbesondere auf dessen Inhalt, übertragen wird, wobei das weitere Medium eine Temperatur von weniger als 200 Grad Celsius, insbesondere weniger als 140 Grad Celsius und vorzugsweise weniger als 100 Grad Celsius, aufweist. Dabei ist es vorzugsweise vorgesehen, dass die beispielsweise als Druckbehälter ausgebildeten Behälter nur mit kalten Medien gefüllt werden, welche vorzugsweise eine Temperatur von weniger als 140 Grad Celsius, vorzugsweise weniger als 100 Grad Celsius, aufweisen. Dies erlaubt die Verwendung von besonders kostengünstigen Materialien und Druckbehälterkonzepten, sodass als die Behälter beispielsweise Behälter auf Kunststoffbasis oder unterirdische Behälter auf Betonbasis verwendet werden können.

Eine weitere Ausführungsform zeichnet sich dadurch aus, dass bei der Wärmezufuhr die Wärme von einem Kraftwerk, einem Industrieprozess oder einer natürlichen Wärmequelle, zum Beispiel Geo- und/oder Solarthermie, bereitgestellt wird. Hierdurch lässt sich ein besonders effizientes Verfahren realisieren.
Schließlich hat es sich als besonders vorteilhaft gezeigt, wenn das Medium direkt aus einem Kraftwerk oder einem Industrieprozess bereitgestellt und wieder dorthin zurückgeführt wird.

Weitere Vorteile, Merkmale und Einzelheiten der Erfindung ergeben sich aus der nachfolgenden Beschreibung bevorzugte Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische Darstellung einer Vorrichtung gemäß einer ersten Ausführungsform zum Speichern von Energie in Form von elektrischer Energie, mit zwei Behältern, einer im ersten der Behälter angeordneten Trenneinrichtung, einer Temperierungseinrichtung, einer Fördereinrichtung und einer Expansionseinrichtung;
- FIG 2: eine schematische Darstellung der Vorrichtung gemäß einer zweiten Ausführungsform; und
- FIG 3: eine schematische Darstellung der Vorrichtung gemäß einer dritten Ausführungsform.

In den Figuren sind gleiche oder funktionsgleiche Elemente mit gleichen Bezugszeichen versehen.

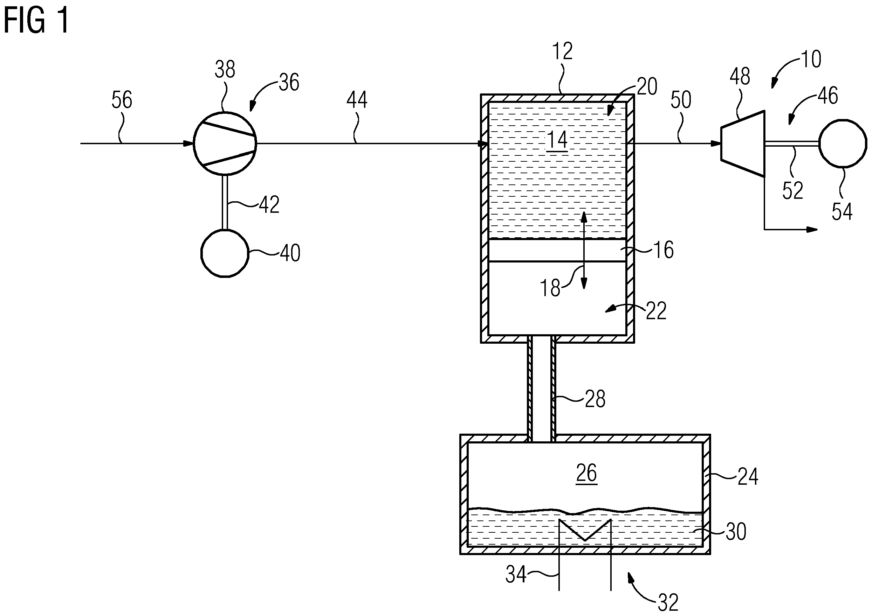

FIG 1 zeigt in einer schematischen Darstellung eine im Ganzen mit 10 bezeichnete Vorrichtung gemäß einer ersten Ausführungsform zum Speichern von Energie vorliegend in Form von elektrischer Energie. Die Vorrichtung 10 umfasst wenigstens einen ersten Behälter 12, welcher einen im Ganzen mit 14 bezeichneten ersten Aufnahmeraum aufweist. Die Vorrichtung 10 kann ohne weiteres eine Mehrzahl von ersten Behältern mit jeweiligen ersten Aufnahmeräumen umfassen. Dabei können die mehreren Behälter parallel oder in Reihe zueinander geschaltet sein. Der erste Behälter 12 ist ein erster Druckbehälter, da in dem ersten Behälter 12 ein Medium unter Druck gespeichert wird, wie im Folgenden noch erläutert wird.

Die Vorrichtung 10 umfasst eine Trenneinrichtung 16, welche in dem ersten Aufnahmeraum 14 angeordnet und relativ zu dem ersten Behälter 12 bewegbar ist. Wie in FIG 1 durch einen Doppelpfeil 18 veranschaulicht ist, ist die Trenneinrichtung 16 relativ zum ersten Behälter 12 translatorisch bewegbar, das heißt verschiebbar.

Durch die Trenneinrichtung 16 ist der erste Aufnahmeraum 14 in eine erste Kammer 20 und in eine zweite Kammer 22 unterteilt. In der ersten Kammer 20 ist das zuvor genannte Medium aufgenommen beziehungsweise aufnehmbar, wobei das Medium bei der ersten Ausführungsform eine Flüssigkeit beispielsweise in Form von flüssigem Wasser ist. In der, der ersten Kammer 20 gegenüberliegenden zweiten Kammer 22 ist eine Gasphase aufgenommen. Dies bedeutet, dass sich auf einer ersten Seite der Trenneinrichtung 16 das Medium in Form von flüssigem Wasser und auf einer der ersten Seite gegenüberliegenden, zweiten Seite der Trenneinrichtung 16 eine Gasphase befindet. Die Trenneinrichtung 16 ist leicht verschiebbar beziehungsweise bewegbar, sodass auf beiden Seiten, das heißt in beiden Kammern 20 und 22, der gleiche Druck herrscht. Vorzugsweise sind die Kammern 20 und 22 mittels der Trenneinrichtung 16 voneinander getrennt beziehungsweise abgedichtet, sodass ein Stoffaustausch zwischen den Kammern 20 und 22 nicht oder in nur sehr geringem Maße möglich ist.

Die Trenneinrichtung 16 kann verschiedenartig ausgeführt werden. Möglich ist beispielsweise der Einsatz einer verschiebbaren Fläche als Kolben, wie es in FIG 1 angedeutet ist. Mit anderen Worten kann es sich bei der Trenneinrichtung 16 um einen Kolben handeln, welcher relativ zum ersten Behälter 12 verschiebbar ist. Alternativ kann die Trenneinrichtung 16 als elastische Blase, insbesondere elastische Polymerblase, ausgebildet sein, welche sich beispielsweise ähnlich eines Luftballons aufbläht beziehungsweise aufbläst, wenn sich ein Volumen, insbesondere Gasvolumen, in ihrem Innern erhöht. Bei dieser Ausführungsform existiert dann beispielsweise auch keine Dichtfläche, und eine besonders gute Dichtigkeit zwischen dem Medium beziehungsweise dem Wasser und der Gasphase kann realisiert werden. Alternativ ist der Einsatz eines nicht-elastischen beziehungsweise starren Materials möglich. Dabei ist dann beispielsweise in dem ersten Behälter 12 eine Struktur des nicht-elastischen Materials eingebracht, und diese Struktur kann sich beispielsweise zusammenfalten, wenn das Wasser in den ersten Behälter 12, insbesondere die erste Kammer 20, gefördert beziehungsweise gepumpt wird.

Aus FIG 1 ist besonders gut erkennbar, dass die Trenneinrichtung 16 unter gleichzeitiger Volumenänderung der Kammern 20 und 22 relativ zum ersten Behälter 12 bewegbar beziehungsweise verschiebbar ist. Dies bedeutet, dass mit einem Verschieben der Trenneinrichtung 16 relativ zum ersten Behälter 12, beispielsweise eine Volumenverkleinerung der ersten Kammer 20 sowie gleichzeitig eine Volumenvergrößerung der zweiten Kammer 22 einhergehen. Dabei wird das Volumen der ersten Kammer 20 in gleichem Maße verkleinert wie das Volumen der zweiten Kammer 22 vergrößert wird und umgekehrt.

Die Vorrichtung 10 umfasst ferner wenigstens einen zweiten Behälter 24, welcher ebenfalls als Druckbehälter ausgebildet ist. Der zweite Behälter 22 weist einen zweiten Aufnahmeraum 26 auf, welcher über wenigstens eine Leitung 28 mit der zweiten Kammer 22 fluidisch verbunden ist. Dabei steht ein Inhalt 30 des Aufnahmeraums 26 im Stoffaustausch, insbesondere im Idealfall jederzeit in thermodynamischem Gleichgewicht, mit der sich in der zweiten Kammer 22 befindenden Gasphase. Bei dem Inhalt 30 kann es sich um eine Flüssigkeit oder aber um einen Feststoff handeln, der in thermodynamischem Gleichgewicht mit der Gasphase in der zweiten Kammer 22 steht. Es kann sich bei der Flüssigkeit um den gleichen Stoff oder das gleiche Stoffgemisch wie die Gasphase handeln, zum Beispiel ein thermodynamisches Phasengleichgewicht im Zweiphasengebiet. Weiterhin ist ein Lösungsgleichgewicht zwischen dem Inhalt 30 in Form einer Flüssigkeit und der Gasphase möglich, oder zwischen der Gasphase und dem Inhalt 30 befindet sich eine chemische Reaktion im Gleichgewicht.

Die Vorrichtung 10 umfasst darüber hinaus eine Temperierungseinrichtung 32, mittels welcher Wärmeenergie dem zweiten Behälter 24 und somit dessen Inhalt 30 zuführbar und vom zweiten Behälter 24 beziehungsweise dessen Inhalt 30 abführbar ist. Mit anderen Worten ist die Temperierungseinrichtung 32 eine Einrichtung zur Wärmezufuhr in den zweiten Behälter 24 und zur Wärmeabfuhr von dem zweiten Behälter 24. Zur Realisierung dieser Wärmezufuhr und der Wärmeabfuhr umfasst die Temperierungseinrichtung 32 beispielsweise einen Wärmeübertrager 34, welcher auch als Wärmetauscher bezeichnet wird.

Darüber hinaus ist wenigstens eine Fördereinrichtung 36 mit einer Pumpe 38 vorgesehen, mittels welcher das Medium in Form von Wasser mit einem vorgebbaren Druck in die erste Kammer 20 förderbar ist. Der Pumpe 38 ist dabei ein Motor in Form eines Elektromotors 40 zugeordnet, dessen Rotor über eine Welle 42 mit der Pumpe 38 verbunden ist. Dadurch kann die Pumpe 38 mittels des Elektromotors 40 angetrieben werden. Zum Fördern des Wassers wird der Elektromotor 40 mit Energie in Form von elektrischer Energie beziehungsweise elektrischem Strom versorgt, sodass zum Fördern des Wassers in die erste Kammer 20 elektrischer Strom aufgewendet wird. Hierbei ist die Fördereinrichtung 36, insbesondere die Pumpe 38, über wenigstens eine Leitung 44 fluidisch mit der ersten Kammer 14 verbunden, sodass das Wasser mittels der Pumpe 38 über die Leitung 44 in die erste Kammer 20 gefördert werden kann.

Die Vorrichtung 10 umfasst darüber hinaus wenigstens eine Expansionseinrichtung 46 mit einer Turbine 48 oder einer anderen Kraftmaschine. Die Turbine 48 ist in einer Leitung 50 angeordnet, welche einerseits mit der Turbine 48 und andererseits mit der ersten Kammer 20 fluidisch verbunden ist. Über die Leitung 50 kann das unter Druck in der ersten Kammer 20 gespeicherte Wasser aus der ersten Kammer 20 abgeführt und der Turbine 48 zugeführt werden, sodass die Turbine 48 von dem in der ersten Kammer 20 unter Druck aufgenommenen Medium (Wasser) antreibbar ist beziehungsweise angetrieben wird.

Durch das Antreiben der Turbine 48 stellt diese mechanische Energie bereit. Dabei ist die Turbine 48 mit einer Welle 52 gekoppelt, über welche die mechanische Energie bereitgestellt werden kann. Die Vorrichtung 10 umfasst dabei ferner eine elektrische Maschine in Form eines Generators 54, welcher mit der Welle 52 gekoppelt und dadurch von der Turbine 48 beziehungsweise von der durch die Turbine 48 bereitgestellten mechanischen Leistung antreibbar ist. Mittels des Generators 54 kann somit zumindest ein Teil der über die Welle 52 von der Turbine 48 bereitgestellten mechanischen Energie in elektrische Energie beziehungsweise elektrischen Strom umgewandelt werden.

Wird nun beispielsweise dem zweiten Behälter 24 beziehungsweise dessen Inhalt 30 Wärme auf einem hohen Temperaturniveau zugeführt, so steigt durch die Beeinflussung der Gleichgewichtslage in allen Varianten der Druck im zweiten Behälter 24 beziehungsweise im zweiten Aufnahmeraum 26 an. Beispielsweise kommt es - wenn der Inhalt 30 ein Reinstoff wie beispielsweise Ammoniak ist - zur Verdampfung des Reinstoffes, und der Druck steigt analog zur Dampfdruckkurve des Reinstoffes. Durch Wärmezufuhr in den zweiten Behälter 24 beziehungsweise durch Wärmeabfuhr vom zweiten Behälter 24 kann somit der Druck in beiden Behältern 12 und 24 beeinflusst werden, da der Aufnahmeraum 26 über die Leitung 28 mit der zweiten Kammer 22 kommuniziert.

Um nun mittels der Vorrichtung 10 Energie in Form von elektrischer Energie zu speichern beziehungsweise zwischen zu speichern und somit in die Vorrichtung 10 einzuspeichern, wird Wasser mittels der Pumpe 38 in die erste Kammer 20 gepumpt. Dadurch kommt es zu einer Verschiebung der Trenneinrichtung 16 derart, dass das Volumen der ersten Kammer 20 zunimmt und gleichzeitig das Volumen der zweiten Kammer 22 abnimmt. Gleichzeitig, das heißt während das Wasser mittels der Pumpe 38 in die erste Kammer 20 gefördert wird, wird über den Wärmeübertrager 34 bei zumindest im Wesentlichen konstanter Temperatur Wärme von dem zweiten Behälter 24 abgeführt, was dann eine Kondensation der Gasphase und deren Volumenverkleinerung zur Folge hat. Das Einpumpen des Wassers und die gleichzeitige Wärmeabfuhr vom zweiten Behälter 24 führen dazu, dass sich der erste Behälter 12 mit Wasser füllt und der Druck im ersten Behälter 12 zumindest im Wesentlichen gleich bleibt. Die Pumpe 38 fördert dabei gegen einen konstanten Gegendruck, was eine zumindest im Wesentlichen optimale Auslegung und einen hohen Wirkungsgrad ermöglicht. Eine erste Konzeptrechnung wurde mit Ammoniak als der Flüssigkeit beziehungsweise dem Medium durchgeführt. Dabei kann laut der Dampfdruckkurve von Ammoniak Wasser bei circa 10 bar in den ersten Behälter 12 gepumpt werden, wenn Wärme bei circa 25 Grad Celsius am Wärmeübertrager 34 beziehungsweise mittels dieses vom zweiten Behälter 24 abgeführt wird. Ist der erste Behälter 12 nun mit Wasser gefüllt, ist der Einspeichervorgang abgeschlossen, und das System beziehungsweise die Vorrichtung 10 ist vollständig geladen.

Soll nun elektrische Energie beziehungsweise elektrischer Strom wieder zurückgewonnen werden, wird dem Wärmeübertrager 34 bei einer hohen Temperatur von weniger als 200 Grad Celsius (°C), bevorzugt bei weniger als 140 Grad Celsius (°C) und vorzugsweise von weniger als 100 Grad Celsius (°C) Wärme zugeführt. Dies erfolgt beispielsweise derart, dass dem Wärmeübertrager 34 ein weiteres Medium zugeführt wird, dessen Temperatur geringer als 200 Grad Celsius, bevorzugt geringer 140 Grad Celsius und vorzugsweise geringer als 100 Grad Celsius beträgt. Das weitere Medium stammt beispielsweise aus einem Kraftwerks- oder Industrieprozess und enthält Wärme in Form von Abwärme, die über den Wärmeübertrager 34 beziehungsweise die Temperierungseinrichtung 32 beim Rückgewinnen von elektrischem Strom, das heißt beim Ausspeichern, genutzt wird. Durch diese Wärmezufuhr steigt der Druck in beiden Behältern 12 und 24.

Im Beispiel mit Ammoniak als dem Medium erhält man bei einer Wärmezufuhr bei 70 Grad Celsius einen Innendruck von circa 33 bar. Dabei steht das Wasser nun bei erhöhtem Druck für die Expansion über die als Expansionsmaschine ausgebildete Turbine 48 zur Verfügung. Aufgrund des erhöhten Drucks bei der Ausspeicherung kann sogar eine höhere Menge an elektrischer Energie ausgespeichert werden als zuvor über den Elektromotor 40 eingespeichert wurde. Unter der Annahme von isotropen Wirkungsgraden der Pumpe 38 und der Turbine 48 von 90 Prozent, unter der Annahme von Wasser als förderbarem Medium in die Kammer 20 und unter der Annahme, dass Ammoniak als das Medium beziehungsweise die Flüssigkeit verwendet wird, die verdampft beziehungsweise kondensiert wird, beträgt der Faktor zwischen ausgespeicherter elektrischer Energie und eingespeicherter elektrischer Energie circa 1,7, was einem elektrischen Speicherwirkungsgrad von bis zu 170 Prozent entspricht.

Die Zufuhr von Wärme beim Ausspeichern ist aus einer Vielzahl von Quellen möglich. Mit anderen Worten kann eine Vielzahl von Quellen genutzt werden, welche Abwärme bereitstellen, die über den Wärmeübertrager 34 dem zweiten Behälter 24 zugeführt werden kann. Hierfür kann beispielsweise Wärme aus dem Abgas oder dem Wasserdampfkreislauf von Kraftwerken und Industrieanlagen, aus geothermischer Wärme, aus solarer Wärme, aus Wärme aus Heiznetzen, aus Verbrennungswärme oder aus sonstigen Quellen verwendet werden. Die Einbindung beziehungsweise Einbringung oder Zufuhr von Wärme in den zweiten Behälter 24 ist durch eine Vielzahl von Lösungen möglich. Hierbei können beispielsweise Wärmetauscherflächen, berippte Rohre, Wärmerohre, sogenannte Heatpipes etc. genutzt werden.

Insgesamt ist erkennbar, dass bei der ersten Ausführungsform mittels der Vorrichtung 10 eine Energiespeicherung durch Druckwasser in dem wenigstens einem als Druckbehälter ausgebildeten Behälter 12 erfolgt. Dabei wird beim Ausspeichervorgang Abwärme auf einem Temperaturniveau von vorzugsweise weniger als 200 Grad Celsius (°C) eingesetzt. Abwärme im Temperaturbereich von weniger als 200 Grad Celsius, vorzugsweise weniger als 100 Grad Celsius, fällt bei vielen Kraftwerks- und Industrieprozessen an. Dieses Temperaturniveau ist üblicherweise zu niedrig, um eine Nutzung der Wärme möglich zu machen. In manchen Prozessen ist auch eine gezielte Wärmeabfuhr in diesem Temperaturbereich notwendig, da zum Beispiel ein Prozessstrom gekühlt werden muss. Generell ist Abwärme von weniger als 100 Grad Celsius an verschiedenen Standorten verfügbar und kann somit kostengünstig oder kostenfrei eingesetzt beziehungsweise genutzt werden.

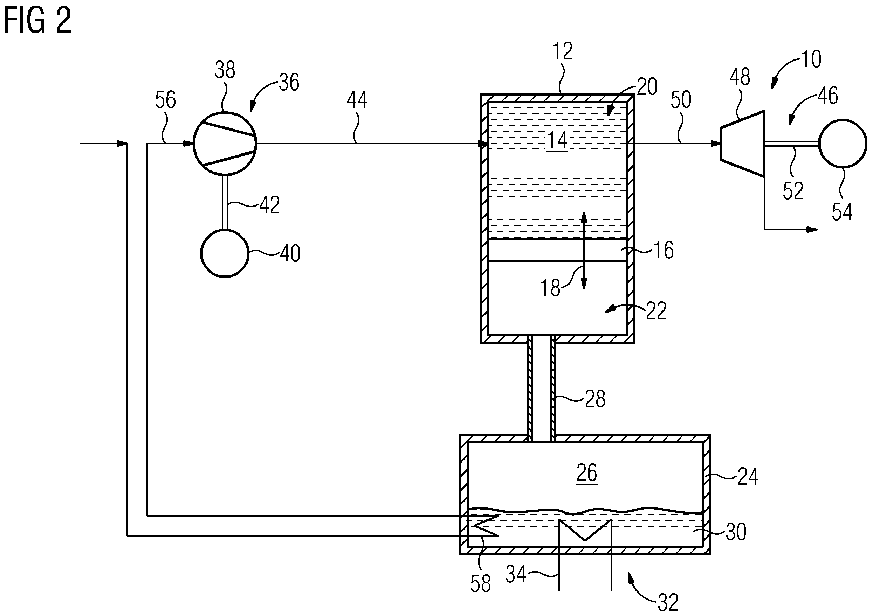

FIG 2 zeigt eine zweite Ausführungsform der Vorrichtung 10. Bei der ersten Ausführungsform und bei der zweiten Ausführungsform ist, beispielsweise in Strömungsrichtung des Mediums stromauf der Pumpe 38, eine von dem Medium durchströmbare Leitung 56 vorgesehen, über welche das Medium beispielsweise aus einem Reservoir der Pumpe 38 zugeführt wird. Die zweite Ausführungsform unterscheidet sich nun insbesondere dadurch von der ersten Ausführungsform, dass in der Leitung 56 ein weiterer Wärmeübertrager 58 angeordnet ist, welcher somit in Strömungsrichtung des Mediums stromauf der ersten Kammer 20 und vorliegend stromauf der Pumpe 38 angeordnet ist. Der weitere Wärmeübertrager 58 dient zum Bewirken eines Wärmeaustauschs zwischen dem die Leitung 56 durchströmenden Medium und dem Inhalt 30 des zweiten Behälters 24.

Die zweite Ausführungsform kommt insbesondere dann zum Einsatz, wenn als das Medium kaltes Wasser verwendet wird. Dieses Wasser kann dann zum Wärmeaustausch mit dem beispielsweise als Flüssigkeit oder Feststoff ausgebildeten Inhalt 30 genutzt werden. Beispielsweise ist es möglich, den Inhalt 30 infolge eines Wärmeübergangs von dem Inhalt 30 über den Wärmeübertrager 58 an das den Wärmeübertrager 58 durchströmende Medium zu kühlen, sodass die Temperatur des Inhalts 30 und somit der Druck im System gering gehalten werden können. Dadurch kann auch der elektrische Energieaufwand zum Befüllen des ersten Behälters 12, das heißt der ersten Kammer 20, mit Wasser besonders gering gehalten werden.

Beim Einspeichern kann auch warmes oder heißes Wasser als das Medium verwendet werden. Dadurch ist dann beispielsweise eine Kombination von Wärme- und Stromspeicherung möglich. Das eingesetzte warme Wasser kann beispielsweise vor der Einspeicherung Wärme aus einer Wärmequelle aufnehmen. Die Speicherung von großen Mengen an Warmwasser, dessen Temperatur vorzugsweise geringer als 140 Grad Celsius ist, wird heute in Fernwärmespeichern durchgeführt. Diese Wärmespeicher dienen beispielsweise als Puffer in Fernwärmenetzen. Dies kann auch bei der Vorrichtung 10 durchgeführt werden. Das warme Wasser wird hierfür nach seiner Expansion einem Wärmetauscher zugeführt, sodass im Wasser enthaltene Wärme dem Wasser entzogen und genutzt werden kann.

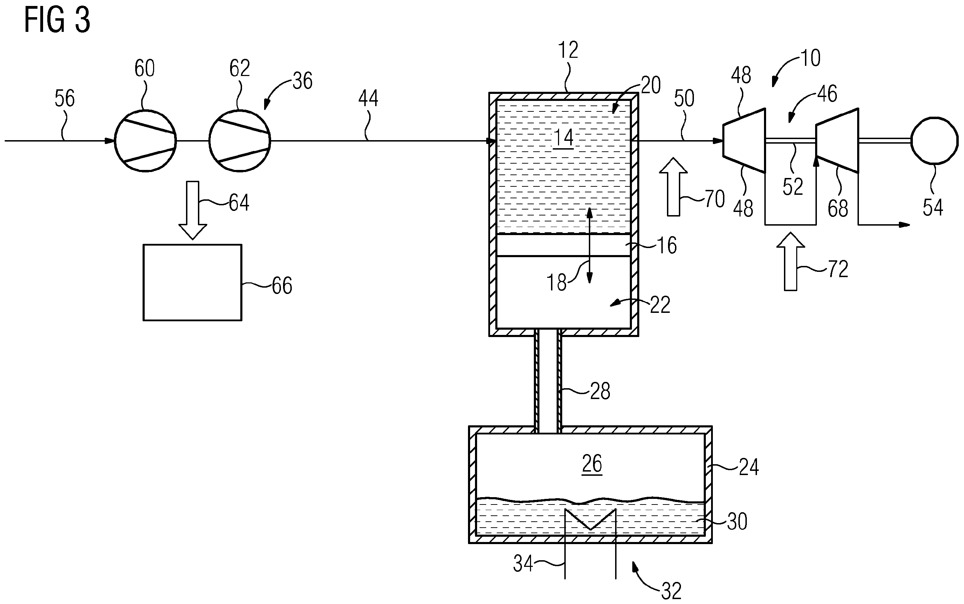

FIG 3 zeigt die Vorrichtung 10 gemäß einer dritten Ausführungsform. Bei der dritten Ausführungsform wird als das Medium keine Flüssigkeit, sondern ein Gas in Form von Luft verwendet. Das Medium ist ein Speichermedium, das zum Einspeichern und Ausspeichern der elektrischen Energie genutzt wird.

Bei der dritten Ausführungsform umfasst die Fördereinrichtung 36 zwei in Reihe beziehungsweise seriell zueinander geschaltete Verdichter 60 und 62, mittels welchen die Luft gefördert und verdichtet wird. Beispielsweise ist jedem der Verdichter 60 und 62 ein Motor insbesondere in Form eines Elektromotors zugeordnet, mittels welchem der jeweilige Verdichter 60 beziehungsweise 62 unter Aufwendung von elektrischer Energie beziehungsweise Strom angetrieben wird. Somit ist es auch bei der dritten Ausführungsform möglich, elektrische Energie in der Vorrichtung 10 ein zu speichern beziehungsweise zwischen zu speichern und aus dieser aus zu speichern.

Durch das Verdichten der Luft wird diese erwärmt. Zwischen den Verdichtern 60 und 62, welche auch als Stufen oder Verdichtungsstufen bezeichnet werden, ist eine in FIG 3 nicht dargestellte Kühleinrichtung vorgesehen, mittels welcher die durch den Verdichter 60 verdichtete und dadurch erwärmte Luft stromab des Verdichters 60 und stromauf des Verdichters 62 gekühlt wird. Infolge dieses Kühlens wird zumindest ein Teil einer in der Luft enthaltenen Wärmemenge aus der Luft abgeführt, was in FIG 3 durch einen Richtungspfeil 64 veranschaulicht wird. Die mittels der Kühleinrichtung von der Luft abgeführte Wärme wird einem Wärmespeicher 66 zugeführt und in diesem gespeichert. Insgesamt ist aus FIG 3 erkennbar, dass bei der dritten Ausführungsform eine mehrstufige Komprimierung der Luft vorgesehen ist. Dabei wird jeweils zwischen den Stufen (Verdichter 60 und 62) Wärme von der verdichteten Luft abgeführt, sodass die Luft gekühlt wird. Vorzugsweise wird die Wärme auf einem Temperaturniveau von weniger als 200 Grad Celsius abgeführt. Durch das Speichern der abgeführten Wärme in dem Wärmespeicher 66 kann die gespeicherte Wärme für andere Zwecke genutzt werden, wie im Folgenden noch erläutert wird.

Bei der dritten Ausführungsform ist es vorgesehen, dass auch die Entspannung der Luft beim Ausspeichern mehrstufig durchgeführt wird. Hierzu umfasst die Expansionseinrichtung 46 die Turbine 48 sowie eine weitere Turbine 68, welche in Reihe zur Turbine 48 angeordnet ist. Dabei sind die Turbinen 48 und 68 über die Welle 52 miteinander gekoppelt, sodass der Generator 54 von den Turbinen 48 und 68 antreibbar ist. Durch einen Richtungspfeil 70 ist veranschaulicht, dass der Luft stromab des ersten Behälters 12 und stromauf der Turbine 48 zumindest ein Teil der im Wärmespeicher 66 gespeicherten Wärme zugeführt wird. Ferner wird - wie durch einen Richtungspfeil 72 veranschaulicht ist - zumindest ein Teil der im Wärmespeicher 66 gespeicherten Wärme der Luft zwischen den Turbinen 48 und 68 zugeführt, um dadurch die Stromerzeugung während der Ausspeicherung zu erhöhen und ein übermäßiges Abfallen der Temperatur der Luft bei der Expansion zu vermeiden. Der elektrische Speicherwirkungsgrad ist durch die Verwendung von Abwärme beim Ausspeichern sehr hoch im Vergleich zu herkömmlichen Druckluft-Konzepten und kann in einem Bereich von einschließlich 70 Prozent bis einschließlich 80 Prozent liegen. Die Wärmezufuhr, die durch den Richtungspfeil 72 angedeutet wird, kann auch durch die Verbrennung eines regenerativen oder fossilen Brennstoffes, zum Beispiel Erdgas, geschehen.

Insgesamt ist aus FIG 1 bis 3 erkennbar, dass durch Nutzung von Abwärme eine Druckerhöhung in einem Druckwasser- oder Druckluftspeicher in Form des ersten Behälters 12 realisiert wird. Dabei wird eine Wärmezufuhr in einem Temperaturbereich von weniger als 200 Grad Celsius (°C), bevorzugt von weniger als 140 Grad Celsius, vorzugsweise weniger als 100 Grad Celsius, verwendet, um in einem System bestehend aus Gasphase und Flüssig- beziehungsweise Festphase (zum Beispiel Zweiphasengebiet eines Reinstoffes oder einer Stoffmischung, Lösungsgleichgewicht eines Gases und einer Flüssigkeit, chemische Reaktion zwischen Gas und Flüssigkeit beziehungsweise Feststoff) eine Druckerhöhung zu bewirken und diese auf das Speichermedium in Form des Wassers oder der Luft zu übertragen.

Dadurch ergibt sich der Vorteil, dass die Einspeicherung gegen einen konstanten Speicherdruck erfolgt, sodass stets ein zumindest im Wesentlichen optimaler Betrieb der Pumpe 38 beziehungsweise der Verdichter 60 und 62, das heißt der Fördereinrichtung 36, möglich ist. Die Ausspeicherung erfolgt ebenfalls aus dem Druckbehälter in Form des ersten Behälters 12 bei konstantem Druck, was einen hohen Wirkungsgrad der Stromerzeugung durch die zumindest im Wesentlichen optimale Auslegung einer Kraftmaschine auf diesen Druck ermöglicht. Das System soll dabei bei niedrigen Betriebstemperaturen von weniger als 200 Grad Celsius bei Luft und bei Wasser betrieben werden, um die Verwendung von kostengünstigen StandardBauteilen zu ermöglichen. Dadurch können geringe Speicherkosten realisiert werden. Ferner werden die Druckbehälter in Form der Behälter 12 und 24 nur mit relativ kalten Medien mit einer Temperatur von weniger als 200 Grad Celsius, bevorzugt weniger als 140 Grad Celsius und vorzugsweise weniger als 100 Grad Celsius gefüllt, sodass kostengünstige Materialien und Druckbehälterkonzepte verwendet werden können.

## Patentansprüche

1. Vorrichtung (10) zum Speichern von Energie, mit:
- wenigstens einem einen ersten Aufnahmeraum (14) aufweisenden ersten Behälter (12),
- einer in dem ersten Behälter (12) angeordneten Trenneinrichtung (16), durch welche der erste Aufnahmeraum (14) in eine erste Kammer (20) zum Aufnehmen eines ersten Mediums und eine zweite Kammer (22) zum Aufnehmen einer Gasphase unterteilt ist, wobei die Trenneinrichtung (16) unter gleichzeitiger Volumenänderung der Kammern (20, 22) relativ zum ersten Behälter (12) bewegbar ist,
- wenigstens einem zweiten Behälter (24), welcher einen mit der zweiten Kammer (22) verbundenen zweiten Aufnahmeraum (26) aufweist, dessen Inhalt (30) im Stoffaustausch mit der Gasphase steht, die Vorrichtung (10) **gekennzeichnet durch**:
- einer Temperierungseinrichtung (32), mittels welcher Wärmeenergie dem zweiten Behälter (24) zuführbar und vom zweiten Behälter (24) abführbar ist,
- wenigstens einer Fördereinrichtung (36), mittels welcher das Medium mit einem vorgebbaren Druck in die erste Kammer (20) unter gleichzeitiger, mittels der Temperierungseinrichtung (32) bewirkter Wärmeabfuhr vom zweiten Behälter (24) förderbar ist, und
- wenigstens einer Expansionseinrichtung (46), welche von dem in der ersten Kammer (20) unter Druck aufgenommenen Medium unter gleichzeitiger, mittels der Temperierungseinrichtung (32) bewirkter Wärmezufuhr in den zweiten Behälter (24) antreibbar ist.

2. Vorrichtung (10) nach Anspruch 1,
**dadurch gekennzeichnet, dass**
ein stromauf der ersten Kammer (20) angeordneter Wärmeübertrager (58) zum Bewirken eines Wärmeaustauschs zwischen dem Medium und dem Inhalt (30) des zweiten Behälters (24) vorgesehen ist.

3. Vorrichtung (10) nach einem der Ansprüche 1 oder 2,
**dadurch gekennzeichnet, dass**
das Medium eine Flüssigkeit, insbesondere Wasser, oder ein Gas, insbesondere Luft, ist.

4. Vorrichtung (10) nach einem der vorhergehenden Ansprüche,
**dadurch gekennzeichnet, dass**
der Inhalt (30) des zweiten Behälters (24) eine Flüssigkeit oder ein Feststoff ist.

5. Vorrichtung (10) nach einem der vorhergehenden Ansprüche,
**dadurch gekennzeichnet, dass**
die Fördereinrichtung (36) wenigstens einen Verdichter (60, 62) zum Verdichten des Mediums umfasst.

6. Vorrichtung (10) nach Anspruch 5,
**dadurch gekennzeichnet, dass**
wenigstens ein Wärmespeicher (66) vorgesehen ist, in welchem Wärme aus dem durch das Verdichten erwärmten Medium speicherbar ist.

7. Vorrichtung (10) nach einem der vorhergehenden Ansprüche,
**dadurch gekennzeichnet, dass**
ein von der Expansionseinrichtung (46) antreibbarer Generator (54) vorgesehen ist, mittels welchem durch Antreiben des Generators (54) elektrische Energie bereitstellbar ist.

8. Verfahren zum Speichern von Energie mittels einer Vorrichtung (10) nach Anspruch 1.

9. Verfahren nach Anspruch 8,
**dadurch gekennzeichnet, dass**
die Wärmezufuhr in den zweiten Behälter (24) bei einer Temperatur von weniger als 200 Grad Celsius, insbesondere bei weniger als 140 Grad Celsius und vorzugsweise bei weniger als 100 Grad Celsius, durchgeführt wird.

10. Verfahren nach Anspruch 9,
**dadurch gekennzeichnet, dass**
bei der Wärmezufuhr Wärme von einem weiteren Medium über die Temperierungseinrichtung (32) in den zweiten Behälter (24) übertragen wird, wobei das weitere Medium eine Temperatur von weniger als 200 Grad Celsius, insbesondere weniger als 140 Grad Celsius und vorzugsweise weniger als 100 Grad Celsius, aufweist.

11. Verfahren nach einem der Ansprüche 8 bis 10,
**dadurch gekennzeichnet, dass**
bei der Wärmezufuhr die Wärme von einem Kraftwerk, einem Industrieprozess oder einer natürlichen Wärmequelle bereitgestellt wird.

12. Verfahren nach einem der Ansprüche 8 bis 11,
**dadurch gekennzeichnet, dass**
das Medium direkt aus einem Kraftwerk oder einem Industrieprozess bereitgestellt und wieder dorthin zurückgeführt wird.

## Claims

1. Device (10) for storing energy, comprising:
- at least one first vessel (12) having a first holding space (14),
- a separating apparatus (16) arranged in the first vessel (12), by means of which apparatus the first holding space (14) is divided into a first chamber (20) for holding a first medium and a second chamber (22) for holding a gas phase, the separating apparatus (16) being able to be moved relative to the first vessel (12) with a simultaneous change in volume of the chambers (20, 22),
- at least one second vessel (24), which has a second holding space (26) connected to the second chamber (22), the content (30) of which space undergoes mass transfer with the gas phase,
the device (10) **characterized by**:
- a temperature-control apparatus (32), by means of which heat energy can be supplied to the second vessel (24) and removed from the second vessel (24),
- at least one conveying apparatus (36), by means of which the medium can be conveyed at a specifiable pressure into the first chamber (20) with a simultaneous removal of heat from the second vessel (24) effected by means of the temperature-control apparatus (32), and
- at least one expansion apparatus (46), which can be driven by the medium held under pressure in the first chamber (20) with a simultaneous supply of heat to the second vessel (24) effected by means of the temperature-control apparatus (32).

2. Device (10) according to Claim 1,
**characterized in that**
a heat transfer device (58) arranged upstream of the first chamber (20) is provided for effecting a heat transfer between the medium and the content (30) of the second vessel (24).

3. Device (10) according to either of Claims 1 and 2,
**characterized in that**
the medium is a liquid, in particular water, or a gas, in particular air.

4. Device (10) according to one of the preceding claims,
**characterized in that**
the content (30) of the second vessel (24) is a liquid or a solid.

5. Device (10) according to one of the preceding claims,
**characterized in that**
the conveying apparatus (36) comprises at least one compressor (60, 62) for compressing the medium.

6. Device (10) according to Claim 5,
**characterized in that**
at least one heat accumulator (66) is provided, in which heat from the medium heated by means of the compression can be stored.

7. Device (10) according to one of the preceding claims,
**characterized in that**
a generator (54) which can be driven by the expansion apparatus (46) is provided, by means of which generator electrical energy can be provided by driving the generator (54) .

8. Method for storing energy by means of a device (10) according to Claim 1.

9. Method according to Claim 8,
**characterized in that**
the supply of heat to the second vessel (24) is carried out at a temperature of less than 200 degrees Celsius, in particular at less than 140 degrees Celsius and preferably at less than 100 degrees Celsius.

10. Method according to Claim 9,
**characterized in that**,
during the supply of heat, heat is transferred from a further medium into the second vessel (24) via the temperature-control apparatus (32), the further medium having a temperature of less than 200 degrees Celsius, in particular less than 140 degrees Celsius and preferably less than 100 degrees Celsius.

11. Method according to one of Claims 8 to 10,
**characterized in that**,
during the supply of heat, the heat is provided by a power plant, an industrial process or a natural heat source.

12. Method according to one of Claims 8 to 11,
**characterized in that**
the medium is provided directly from a power plant or an industrial process and supplied back to there again.

## Revendications

1. Installation (10) d'accumulation d'énergie, comprenant :
- au moins une première cuve (12), ayant un premier espace (14) de réception,
- un dispositif (16) de séparation, qui est disposé dans la première cuve (12) et par lequel le premier espace (14) de réception est subdivisé en une première chambre (20) de réception d'un premier milieu et en une deuxième chambre (22) de réception d'une phase gazeuse, le dispositif (16) de séparation étant mobile par rapport à la première cuve (12) avec modifications simultanées du volume des chambres (20, 22),
- au moins une deuxième cuve (24), qui a une deuxième espace (26) de réception, qui communique avec la deuxième chambre (22) et dont le contenu est en échange de matière avec la phase gazeuse,
l'installation (10) étant **caractérisée par** :
- un dispositif (32) de mise en température, au moyen duquel de l'énergie calorifique peut être envoyée à la deuxième cuve (24) et peut être évacuée de la deuxième cuve (24),
- au moins un dispositif (36) de transport, au moyen duquel le milieu peut, à une pression pouvant être donnée à l'avance, être transporté dans la première chambre (20) avec évacuation simultanée de la chaleur, provoquée au moyen du dispositif (32) de mise en température, de la deuxième cuve (24) et
- au moins un dispositif (46) d'expansion, qui peut être entraîné par le milieu reçu sous pression dans la première chambre (20) avec apport simultané de la chaleur, provoquée au moyen du dispositif (32) de mise en température, à la deuxième cuve (24).

2. Installation (10) suivant la revendication 1, **caractérisée en ce que**
il est prévu un échangeur de chaleur (58), monté en amont de la première chambre (20), pour provoquer un échange de chaleur entre le milieu et le contenu (30) de la deuxième cuve (24).

3. Installation (10) suivant l'une des revendications 1 ou 2,
**caractérisée en ce que**
le milieu est un liquide, notamment de l'eau, ou un gaz, notamment de l'air.

4. Installation (10) suivant l'une des revendications précédentes,
**caractérisée en ce que**
le contenu (30) de la deuxième cuve (24) est un liquide ou un solide.

5. Installation (10) suivant l'une des revendications précédentes,
**caractérisée en ce que**
le dispositif (36) de transport comprend au moins un compresseur (60, 62) pour comprimer le milieu.

6. Installation (10) suivant la revendication 5,
**caractérisée en ce qu'**
il est prévu au moins un accumulateur (66) de chaleur, dans lequel peut être accumulée de la chaleur provenant du milieu échauffé par la compression.

7. Installation (10) suivant l'une des revendications précédentes,
**caractérisée en ce qu'**
il est prévu une génératrice (54), qui peut être entraînée par le dispositif (46) d'expansion et au moyen de laquelle de l'énergie électrique peut être mise à disposition par entraînement de la génératrice (54).

8. Procédé d'accumulation d'énergie au moyen d'une installation (10) suivant la revendication 1.

9. Procédé suivant la revendication 8,
**caractérisé en ce que**
on effectue l'apport de chaleur à la deuxième cuve (24) à une température de moins de 200 degrés Celsius, notamment de moins de 140 degrés Celsius et, de préférence, de moins de 100 degrés Celsius.

10. Procédé suivant la revendication 9,
**caractérisé en ce que**
lors de l'apport de chaleur, on transmet de la chaleur d'un autre milieu, par l'intermédiaire du dispositif (32) de mise en température, à la deuxième cuve (24), l'autre milieu ayant une température de moins de 200 degrés Celsius, notamment de moins de 140 degrés Celsius et, de préférence, de moins de 100 degrés Celsius.

11. Procédé suivant l'une des revendications 8 à 10,
**caractérisé en ce que**
lors de l'apport de chaleur, on met à disposition de la chaleur d'une centrale électrique, d'un processus industriel ou d'une source de chaleur naturelle.

12. Procédé suivant l'une des revendications 8 à 11,
**caractérisé en ce que**
l'on met à disposition le milieu directement à partir d'une centrale électrique ou d'un processus industriel et on l'y retourne.
